# EUROPÄISCHE PATENTSCHRIFT

(11) **EP 3 118 074 B1**
(45) Veröffentlichungstag und Bekanntmachung des Hinweises auf die Patenterteilung: **05.01.2022**
(21) Anmeldenummer: 16177133.2
(22) Anmeldetag: 30.06.2016
(51) Int. Cl.: B60T 11/26, B60T 17/06, F15B 1/26

(54) **AUSGLEICHSBEHÄLTER**
COMPENSATING RESERVOIR
RESERVOIR COMPENSATEUR

(30) Priorität: 02.07.2015 DE 102015110723
(43) Veröffentlichungstag der Anmeldung: 18.01.2017
(73) Patentinhaber: Gustav Magenwirth GmbH & Co. KG, 72574 Bad Urach (DE)
(72) Erfinder: Neutsch, Christian, 72764 Reutlingen (DE)
(74) Vertreter: Hoeger, Stellrecht & Partner Patentanwälte mbB

(56) Entgegenhaltungen:
- DE-A1- 1 909 001
- DE-A1-102008 006 851
- DE-B3-102010 009 892
- DE-T2- 60 301 763

## Beschreibung

Die Erfindung betrifft einen Ausgleichsbehälter für ein hydraulisches Betätigungssystem, insbesondere ein hydraulisches Bremssystem oder ein Kupplungssystem, umfassend ein Gehäuse, in dessen Innenraum ein zur Bevorratung von Hydraulikmedium vorgesehener Vorratsraum durch ein entsprechend einem Volumen des Vorratsraums seine Form verändernden Trennelement begrenzt ist.

Derartige Ausgleichsbehälter sind aus dem Stand der Technik, zum Beispiel aus DE 102008006851 A1 bekannt.

Bei diesen besteht allerdings das Problem, die Größe des Volumens des Vorratsraums in möglichst einfacher Weise erkennbar zu machen.

Diese Aufgabe wird bei einem Ausgleichsbehälter der eingangs beschriebenen Art erfindungsgemäß dadurch gelöst, dass das Gehäuse das Trennelement in allen seinen Formen, welche möglichen Volumina des Vorratsraums entsprechen, schützend übergreift, dass ein füllstandanzeigender Bereich des Trennelements bei einer Änderung des von dem in dem Vorratsraum bevorrateten Hydraulikmedium beanspruchten Volumens seine Lage in dem Gehäuse verändert und diese Lage jeweils eine füllstandanzeigende Stellung darstellt und dass die innerhalb des Gehäuses liegende füllstandanzeigende Stellung durch einen Sichtbereich des Gehäuses von außerhalb des Gehäuses sichtbar ist, wobei das Trennelement einen Dichtkörper umfasst, welcher den Vorratsraum am Übergang zwischen dem Trennelement und dem Gehäuse abdichtet, und wobei ein Wulstbereich des Dichtkörpers mit einem Verbindungsabschnitt an dem Membrankörper angeordnet ist.

Der Vorteil der erfindungsgemäßen Lösung ist darin zu sehen, dass allein durch das Erfassen der füllstandanzeigenden Stellung des füllstandanzeigenden Bereichs des Trennelements die Größe des Volumens des Vorratsraums erfasst werden kann und dass außerdem durch die erfindungsgemäße Lösung das Trennelement durch das Gehäuse vor externen Beschädigungen geschützt ist.

Damit ist eine einfache Möglichkeit zur Erfassung des Volumens des Vorratsraums geschaffen, nämlich einfach durch Erfassen des füllstandanzeigenden Bereichs des Trennelements, und andererseits dennoch das Trennelement selbst durch das Gehäuse optimal geschützt.

Eine besonders günstige Lösung sieht vor, dass die füllstandanzeigende Stellung des füllstandanzeigenden Bereichs des Trennelements durch die Form des füllstandanzeigenden Bereichs dargestellt ist.

Beispielsweise ist die Form des füllstandanzeigenden Bereichs des Trennelements durch den Grad der Aufwölbung des Trennelements in dem Innenraum des Gehäuses erfassbar.

Besonders günstig ist es dabei, wenn die füllstandanzeigende Stellung des füllstandanzeigenden Bereichs des Trennelements durch eine Relativposition bezogen auf eine Markierung oder Grenze des Sichtbereichs dargestellt ist, so dass eine die füllstandanzeigende Stellung erfassende Person die Relativposition der füllstandanzeigenden Stellung in einfacher Weise bezogen auf diese Markierung oder Grenze des Sichtbereichs erfassen kann.

Es ist aber auch denkbar, den Sichtbereich in mehrere Teilbereiche zu unterteilen und beispielsweise zu erfassen, in welchem Teilbereich des Sichtbereichs die füllstandanzeigende Stellung sichtbar ist, wobei dem jeweiligen Teilbereich ein bestimmtes Volumen des Vorratsraums zugeordnet ist.

Alternativ dazu ist es aber auch denkbar, in dem Sichtbereich eine Skala vorzusehen und einzelnen Skalenelementen unterschiedlichen Größen des Volumens zuzuordnen, so dass durch Vergleich der füllstandanzeigenden Stellung mit der Skala die Größe des Volumens des Vorratsraums erfasst werden kann.

Hinsichtlich der Anordnung des Trennelements innerhalb des Gehäuses wurden bislang keine näheren Angaben gemacht.

Beispielsweise könnte das Trennelement selbst innerhalb in dem Innenraum als Blase ausgebildet sein und die Größe der Blase deren füllstandanzeigende Stellung darstellen.

Eine besonders günstige Lösung sieht jedoch vor, dass das Trennelement mit einem Basiselement des Gehäuses verbunden ist.

Vorzugsweise ist hierbei vorgesehen, dass der Vorratsraum von dem Trennelement und dem Basiselement umschlossen ist.

Das heißt, dass in diesem Fall das Trennelement ausgehend von dem Basiselement seine Form entsprechend der Größe des Volumens des Vorratsraums verändert.

Beispielsweise sieht eine vorteilhafte Lösung hierzu vor, dass ein Bereich des Basiselements wannenförmig ausgebildet ist und der Wanneninnenraum einen Teilraum des Vorratsraums bildet, wobei insbesondere dieser Teilraum ergänzt wird durch einen weiteren von dem Trennelement im Anschluss an den Wanneninnenraum umgrenzten Teilraum, so dass beide Teilräume zusammen den Vorratsraum ergeben.

Um in besonders einfacher Weise das Basiselement in das Gehäuse integrieren zu können, ist vorzugsweise vorgesehen, dass ein um eine Gehäuseachse geschlossen umlaufender Wandansatz des Basiselements einen Basisbereich einer Seitenwand des Gehäuses bildet.

Hinsichtlich der Anordnung des Sichtbereichs des Gehäuses wurden bislang keine näheren Angaben gemacht.

So ist vorzugsweise vorgesehen, dass der Sichtbereich des Gehäuses so angeordnet ist, dass ein in dem Gehäuse vorgesehener Ausdehnungsraum für das Trennelement einsehbar ist.

Dadurch besteht die Möglichkeit, alle füllstandanzeigenden Stellungen des Trennelements zu erfassen, welche innerhalb des Ausdehnungsraums liegen.

Vorzugsweise ist dabei der Ausdehnungsraum so angeordnet, dass mindestens alle füllstandanzeigenden Stellungen des Trennelements, die einem größeren Volumen des Vorratsraums als dem Minimalvolumen entsprechen, innerhalb des Ausdehnungsraums liegen, so dass diese durch den Sichtbereich erfassbar sind.

Dabei kann der Sichtbereich des Gehäuses ein zusammenhängender Bereich sein, welcher so ausgebildet ist, dass zumindest die füllstandanzeigenden Stellungen aller Volumina des Vorratsraums erfassbar sind, die einem Volumen größer als dem Minimalvolumen entsprechend.

Es ist aber auch denkbar, den Sichtbereich in Teilsichtbereiche zu unterteilen, durch welche verschiedene Bereiche des Ausdehnungsraums einsehbar sind.

Im einfachsten Fall kann der Sichtbereich ein streifenförmiger Bereich sein.

Eine besonders einfache Lösung sieht vor, dass der Sichtbereich des Gehäuses den Ausdehnungsraum umschließt, so dass der Ausdehnungsraum allseitig einsehbar ist.

Bei den Ausführungsformen, bei welchen das Trennelement mit dem Basiselement des Gehäuses verbunden ist, ist vorzugsweise vorgesehen, dass der Sichtbereich des Gehäuses von dem Basiselement weg in einer Erstreckungsrichtung verläuft, so dass alle füllstandanzeigenden Stellungen des Trennelements, die einem Volumen entsprechen, das größer als das Minimalvolumen ist, erfassbar sind und durch ihren Abstand von dem Basiselement die Größe des Volumens anzuzeigen.

Bei einer besonders bevorzugten Ausführungsform ist vorgesehen, dass der Sichtbereich einen UV-Filter umfasst, so dass in vorteilhafter Weise das Trennelement vor einer schädigenden Einwirkung durch UV-Licht geschützt ist.

Insbesondere ist der Sichtbereich für UV-Licht im Wesentlichen undurchlässig, das heißt, dass insbesondere höchstens 10 %, vorzugsweise höchstens 5 %, besonders bevorzugt höchstens 1 % von auf den Sichtbereich eintreffendem UV-Licht durch diesen, beispielsweise in den Ausdehnungsraum, transmittieren.

Beispielsweise ist der Sichtbereich für elektromagnetische Strahlung mit einer Wellenlänge von kleiner als 380 nm, insbesondere kleiner als 360 nm und/oder für elektromagnetische Strahlung mit einer Wellenlänge größer als 200 nm, insbesondere größer als 250 nm, beispielsweise größer als 280 nm im Wesentlichen undurchlässig, das heißt, dass höchstens 10 %, bevorzugt höchsten 5 %, insbesondere höchstens 1 %, von auf den Sichtbereich einfallender, derartiger elektromagnetischer Strahlung durch den Sichtbereich, insbesondere in den Ausdehnungsbereich, transmittieren.

Insbesondere umfasst der Sichtbereich ein UV-Licht absorbierendes Material.

Hinsichtlich der Ausgestaltung des Gehäuses wurden bislang keine näheren Angaben gemacht.

So sieht eine konstruktiv besonders einfach realisierbare Lösung vor, dass der Ausdehnungsraum von einem Seitenwandelement des Gehäuses umgeben ist.

Zur Ausbildung des Sichtbereichs ist in diesem Fall zweckmäßigerweise vorgesehen, dass das Seitenwandelement teilweise transparent ist.

Alternativ dazu ist vorgesehen, dass das Seitenwandelement vollständig transparent ist.

Bei einer besonders bevorzugten Ausführungsform ist vorgesehen, dass das Seitenwandelement mindestens einen transparenten Einsatz umfasst, welcher den Sichtbereich, zumindest teilweise, ausbildet.

Insbesondere ist der mindestens eine transparente Einsatz für sichtbares Licht transparent.

Also ist vorzugsweise der mindestens eine transparente Einsatz für elektromagnetische Strahlung mit einer Wellenlänge größer als 380 nm, insbesondere größer als 400 nm und/oder für elektromagnetische Strahlung mit einer Wellenlänge kleiner als 800 nm, insbesondere kleiner als 780 nm, beispielsweise kleiner als 750 nm im Wesentlichen durchlässig, wobei der mindestens eine transparente Einsatz für derartige elektromagnetische Strahlung im Wesentlichen durchlässig ist, wenn insbesondere mindestens 90 %, bevorzugt mindestens 95 %, insbesondere mindestens 99 % von auf den mindestens einen transparenten Einsatz einfallende derartige elektromagnetische Strahlung durch diesen transmittiert.

Besonders bevorzugt ist es, wenn der mindestens eine transparente Einsatz für UV-Licht im Wesentlichen undurchlässig ist, wobei der mindestens eine transparente Einsatz im Wesentlichen für UV-Licht undurchlässig ist, wenn von auf den mindestens einen transparenten Einsatz einfallendes UV-Licht, also beispielsweise von einfallender elektromagnetischer Strahlung mit einer Wellenlänge kleiner als 380 nm, insbesondere kleiner als 360 nm und/oder von einfallender elektromagnetischer Strahlung mit einer Wellenlänger größer als 200 nm, insbesondere größer als 250 nm, beispielsweise größer als 280 nm, höchstens 10 %, insbesondere höchstens 5 %, bevorzugt höchstens 1 % durch den mindestens einen transparenten Einsatz transmittiert.

Eine weitere alternative Lösung sieht beispielsweise vor, dass das Seitenwandelement Durchbrüche aufweist, durch welche der Ausgleichsraum einsehbar ist.

Hinsichtlich der Ausbildung des Trennelements selbst wurden im Zusammenhang mit der bisherigen Erläuterung der einzelnen Ausführungsformen keinerlei weitere Angaben gemacht.

Dabei kann der Dichtkörper zusätzlich zum Membrankörper vorgesehen sein, beispielsweise als zwei, insbesondere aneinander angeordnete Körper.

Eine besonders vorteilhafte Lösung sieht vor, dass der Dichtkörper und der Membrankörper einstückig ausgebildet sind.

Des Weiteren kann der Dichtkörper beispielsweise als O-Ringdichtung ausgebildet sein, die als Ganzes zur Abdichtung deformiert wird.

Besonders vorteilhaft ist es, wenn ein Wulstbereich des Dichtkörpers mit einem Verbindungsabschnitt des Dichtkörpers an dem Membrankörper angeordnet ist.

Dabei ist insbesondere der Wulstbereich des Dichtkörpers voluminös ausgebildet, so dass dieser viel Dichtmasse bereitstellt und gut zusammenpressbar ist und so der Übergang zwischen dem Trennelement und dem Gehäuse besonders günstig abgedichtet wird.

Insbesondere ist der Wulstbereich dicker ausgebildet als der Verbindungsabschnitt, beispielsweise ist der Wulstbereich bezogen auf einen Querschnitt, welcher von dem Innenraum des Gehäuses nach außerhalb des Gehäuses verläuft, dicker ausgebildet als der Verbindungsabschnitt.

Eine besonders günstige Lösung sieht vor, dass der Dichtkörper mindestens eine Dichtlippe zur Bildung einer Dichtlinie umfasst, da durch die Ausbildung einer Dichtlinie eine verbesserte Abdichtung selbst durch geringe Druckbeaufschlagung möglich ist.

Besonders günstig ist es, wenn der Dichtkörper mehrere Dichtlippen zur Bildung jeweils einer Dichtlinie umfasst.

Beispielsweise weist das Gehäuse eine Aufnahme für das Trennelement, bevorzugt für den Dichtkörper des Trennelementes, insbesondere für den Wulstbereich des Dichtkörpers, auf.

Besonders günstig ist es, wenn das Seitenwandelement die Aufnahme für das Trennelement, bevorzugt für den Dichtkörper des Trennelementes aufweist.

Insbesondere bei der Abdichtung zwischen dem Trennelement und dem Basiselement ist vorzugsweise vorgesehen, dass das Basiselement eine Aufnahme für den Dichtkörper des Trennelements aufweist.

Die Aufnahme kann dabei in unterschiedlichster Art und Weise ausgebildet sein.

Beispielsweise kann das Basiselement eine stufenförmige Aufnahme aufweisen.

Eine hinsichtlich einer möglichst optimalen Abdichtung besonders günstige Lösung sieht vor, dass die Aufnahme in Form einer Rinne ausgebildet ist.

Dabei kann die Rinne einen beliebigen Querschnitt, beispielsweise einen halbrunden oder einen rechteckähnlichen Querschnitt aufweisen.

In diesem Fall ist es besonders vorteilhaft, wenn die mindestens eine Dichtlippe oder die mehreren Dichtlippen an Wandbereichen der Rinne zur Ausbildung von Dichtlinien anliegen.

Bei einer besonders vorteilhaften Ausführungsform ist vorgesehen, dass der Dichtkörper durch mindestens ein Druckelement beaufschlagt wird, wodurch in vorteilhafter Weise eine besonders günstige Abdichtung erreicht wird.

Insbesondere ist vorgesehen, dass der Dichtkörper durch mindestens zwei Druckelemente beaufschlagt wird, wodurch eine redundante Abdichtung gegeben ist.

Beispielsweise wird der Dichtkörper durch zwei Druckelemente beaufschlagt.

Besonders günstig ist es, wenn der Wulstbereich des Dichtkörpers durch mindestens ein Druckelement beaufschlagt wird, da dieser viel Abdichtmasse bereitstellt zum Verpressen und Abdichten und so eine besonders günstige Abdichtung erreicht wird.

Beispielsweise wird der Verbindungsabschnitt des Dichtkörpers durch mindestens ein Druckelement beaufschlagt.

Um eine besonders optimale Abdichtung zu erreichen, ist vorzugsweise vorgesehen, dass der Dichtkörper in der Aufnahme durch ein Druckelement beaufschlagt und bezogen auf den unbeaufschlagten Zustand deformiert ist, um dadurch die Abdichtung in der Aufnahme zu verbessern.

Hinsichtlich der Ausbildung des Druckelements wurden bislang keine weiteren Angaben gemacht.

Beispielsweise ist es denkbar, das Druckelement als separates Element vorzusehen.

Eine konstruktiv besonders einfache und auch für die Montage günstige Lösung sieht vor, dass das Druckelement an dem Seitenwandelement gehalten ist.

Beispielsweise ist dabei das Druckelement als Vorsprung des Seitenwandelements oder als Fortsatz des Seitenwandelements ausgebildet.

Insbesondere ist es dabei günstig, wenn das Druckelement und das Seitenwandelement einstückig ausgebildet sind.

Insbesondere dann, wenn der Dichtkörper mindestens eine Dichtlippe oder mehrere Dichtlippen umfasst ist vorzugsweise vorgesehen, dass die mindestens eine Dichtlippe durch beaufschlagen des Dichtkörpers dichtend an der Aufnahme anliegt.

Noch vorteilhafter ist es, wenn die mehreren Dichtlippen durch beaufschlagen des Dichtkörpers dichtend an der Aufnahme anliegen.

Ferner betrifft die Erfindung eine Bremsarmatur eines Fahrzeugs, wobei der Ausgleichsbehälter in die Bremsarmatur, insbesondere in die Bremsarmatur eines lenkergesteuerten Fahrzeugs, integriert ist.

Insbesondere ist die Bremsarmatur vorgesehen für ein Quad und/oder ein Zweirad, beispielsweise ein Pedelec, ein Fahrrad oder ein Motorrad.

In ein Armaturengehäuse der Bremsarmatur ist ein Teil eines hydraulischen Betätigungssystems integriert, wobei das hydraulische Betätigungssystem einen Hauptzylinder, einen Bremszylinder und einen Ausgleichsbehälter umfasst.

Beispielsweise umfasst die Bremsarmatur eine Beaufschlagungseinrichtung für den Hauptzylinder.

Insbesondere ist vorgesehen, dass das Armaturengehäuse zumindest teilweise ein Gehäuse des Hauptzylinders ausbildet.

Dabei umfasst der in der Bremsarmatur integrierte Ausgleichsbehälter eines oder mehrere der voranstehend genannten Merkmale.

Besonders bevorzugt ist es, wenn das Armaturengehäuse einen Teil eines Gehäuses des Ausgleichsbehälters ausbildet.

Beispielsweise bildet das Armaturengehäuse ein Basiselement des Ausgleichsbehälters aus.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: eine schematische Darstellung eines hydraulischen Betätigungssystems;
- Fig. 2: einen Schnitt durch ein erstes Ausführungsbeispiel eines erfindungsgemäßen Ausgleichsbehälters;
- Fig. 3: eine ausschnittsweise vergrößerte Darstellung des Ausgleichsbehälters gemäß Fig. 2 in einem Bereich einer Aufnahme eines Basiselements;
- Fig. 4: eine Darstellung einer Bremsarmatur mit einem Ausgleichsbehälter gemäß einem zweiten Ausführungsbeispiel der erfindungsgemäßen Lösung;
- Fig. 5: einen Schnitt V-V gemäß Fig. 4 durch die Bremsarmatur gemäß dem zweiten Ausführungsbeispiel;
- Fig. 6: einen Schnitt VI-VI gemäß Fig. 4 durch den Ausgleichsbehälter gemäß dem zweiten Ausführungsbeispiel;
- Fig. 7: eine ausschnittsweise vergrößerte Darstellung gemäß Fig. 4 in dem Bereich des Ausgleichsbehälters;
- Fig. 8: eine ausschnittsweise vergrößerte Darstellung des Schnittes gemäß Fig. 6 in einem Bereich eines Seitenwandelementes des Ausgleichsbehälters gemäß dem zweiten Ausführungsbeispiel und

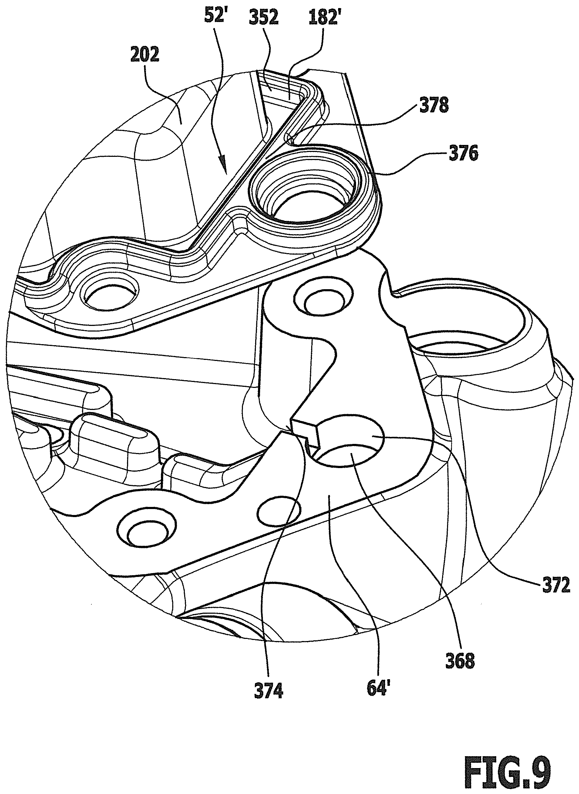

- Fig. 9: eine ausschnittsweise Darstellung eines Basiselementes und eines Trennelementes in einem Bereich eines Einlasskanales.

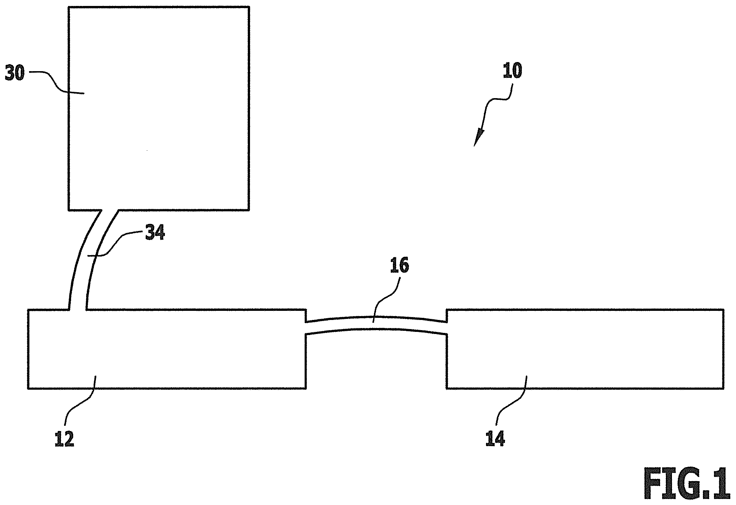

Ein in Fig. 1 schematisch dargestelltes und als Ganzes mit 10 bezeichnetes hydraulisches Betätigungssystem, beispielsweise für ein Fahrzeug, beispielsweise ein Quad oder ein Zweirad, insbesondere ein Pedelec, ein Fahrrad oder auch ein Motorrad, umfasst einen, beispielsweise in einer Bremsarmatur für ein Fahrzeug, beispielsweise ein Quad oder ein Zweirad, insbesondere ein Pedelec, ein Fahrrad oder auch ein Motorrad, integrierten Hauptzylinder 12 und einen Betätigungszylinder 14, wobei der Hauptzylinder 12 über eine erste Hydraulikleitung 16 dem Betätigungszylinder 14 druckbeaufschlagtes Hydraulikmedium zuführt, sowie einen, beispielsweise mit der Bremsarmatur verbundenen oder in die Bremsarmatur integrierten Ausgleichsbehälter 30, welcher zur Bevorratung und zur Verfügungstellung von Hydraulikmedium vorgesehen ist, derart, dass bei Bedarf Hydraulikmedium aus dem in dem Ausgleichsbehälter 30 befindlichen Hydraulikmediumvorrat durch eine an den Ausgleichsbehälter 30 angeschlossene zweite Hydraulikleitung 34 in den Hauptzylinder 12 eintritt und dort einen Mangel an Hydraulikmedium ausgleicht und so das hydraulische Betätigungssystem 10 und insbesondere der Hauptzylinder 12 stets mit ausreichend Hydraulikmedium versorgt sind.

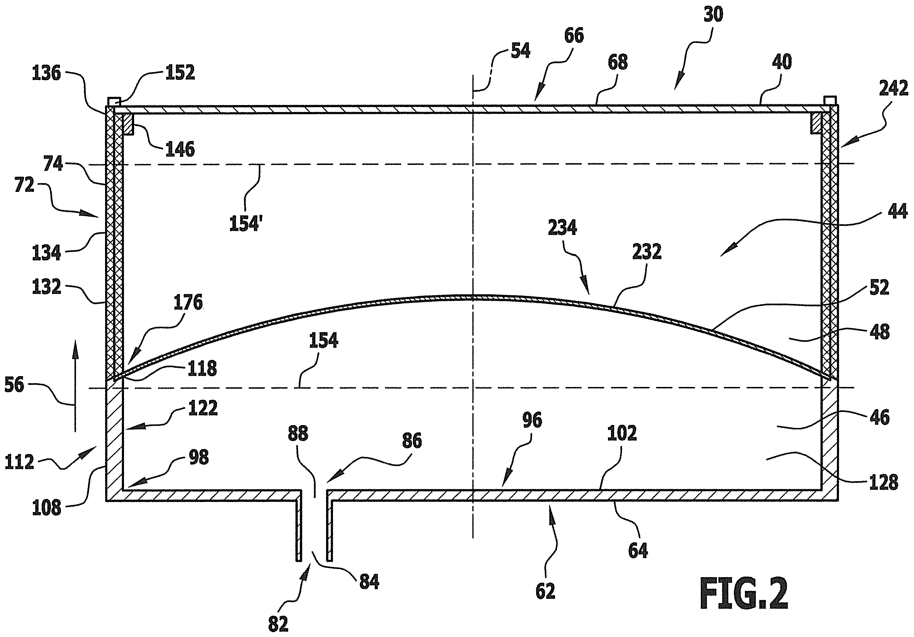

Ein Ausführungsbeispiel eines erfindungsgemäßen Ausgleichsbehälters 30 umfasst ein formstabiles und als Ganzes mit 40 bezeichnetes und beispielsweise mit dem Hauptzylinder 12 verbundenes und beispielsweise zumindest teilweise in die Bremsarmatur des Fahrzeugs, beispielsweise des Quads oder des Zweirads, integriertes Gehäuse, wobei in einem Innenraum 44 des Gehäuses 40, dessen Volumen durch die Begrenzung durch das formstabile Gehäuse 40 schwankungsfrei festgelegt ist, ein zur Bevorratung von Hydraulikmedium vorgesehener Vorratsraum 46 angeordnet ist (Fig. 2).

Das Volumen des Vorratsraums 46 entspricht im Wesentlichen dem Volumen des darin bevorrateten Hydraulikmediums und ist somit, beispielsweise aus Zu- oder Abfluss von Hydraulikmedium resultierenden, Schwankungen unterworfen.

In dem Innenraum 44 des Gehäuses 40 ist der Vorratsraum 46 durch ein zumindest teilweise formvariables, insbesondere als elastische Membran oder als Balg ausgebildetes, Trennelement 52 begrenzt, so dass Volumenschwankungen des Vorratsraums 46 eine Formveränderung des Trennelements 52 hervorrufen und wobei sich das Trennelement 52 ausgehend von einem Minimalvolumen des Vorratsraums 46 bei einer Volumenvergrößerung desselben in einen im Innenraum 44 hierzu vorgesehenen Ausdehnungsraum 48 hinein bis zu einem Maximalvolumen ausdehnen kann, jedoch bleibt dabei das Gesamtvolumen des von dem Gehäuse 40 begrenzten Innenraums 44 unverändert.

Durch die Anordnung des Trennelements 52 in dem Innenraum 44 des Gehäuses 40 wird das Trennelement 52 in optimaler Weise durch das Gehäuse 40 gegen Einwirkungen von außen geschützt.

Das Gehäuse 40 erstreckt sich entlang einer Gehäuseachse 54 in Richtung einer Erstreckungsrichtung 56 von einem in einem ersten Gehäuseendbereich 62 angeordneten Basiselement 64, welches beispielsweise an die Bremsarmatur des Fahrzeugs, beispielsweise des Quads oder des Zweirads, angeordnet oder insbesondere in diese integriert ist, zu einem in einem zweiten Gehäuseendbereich 66 angeordneten Deckelelement 68, wobei in einem zwischen dem ersten Gehäuseendbereich 62 und dem zweiten Gehäuseendbereich 66 liegenden Gehäusezwischenbereich 72 eine zumindest teilweise optisch transparente Seitenwand 74 angeordnet ist.

Das Basiselement 64 umfasst einen als Ganzes mit 82 bezeichneten Auslass, über welchen der Vorratsraum 46 mit der zweiten Hydraulikleitung 34 in Verbindung steht, so dass bei Bedarf aus dem Vorratsraum 46 über den Auslass 82 Hydraulikmedium in die zweite Hydraulikleitung 34 gelangt und weiter in den Hauptzylinder 12 eintritt.

In dieser Ausführungsform umfasst der Auslass 82 einen Auslasskanal 84, der in einem ersten Auslassendbereich 86 über eine Auslassöffnung 88 in den Vorratsraum 46 mündet und ausgehend von dem ersten Auslassendbereich 86 in die zweite Hydraulikleitung 34 einmündet.

Das Basiselement 64 begrenzt den Vorratsraum 46 in einem ersten Begrenzungsbereich 96, wobei der erste Begrenzungsbereich 96 von einer ersten Begrenzungskontur 98 umschlossen ist und beispielsweise der erste Begrenzungsbereich 96 eine, insbesondere im Wesentlichen ebene, Begrenzungsgrundfläche 102 des Basiselements 64 für den Vorratsraum 46 bildet.

In diesem Ausführungsbeispiel weist das Basiselement 64 einen sich in die Erstreckungsrichtung 56, insbesondere ausgehend von der durch die Begrenzungsgrundfläche 102 aufgespannten Fläche erhebenden Wandansatz 108 auf, wobei insbesondere der Wandansatz 108 in einem Basisbereich 112 der Seitenwand 74 angeordnet ist.

Der Wandansatz 108 des Basiselements 64 ist die Gehäuseachse 54 geschlossen umlaufend ausgebildet.

Insbesondere verläuft der Wandansatz 108 entlang der ersten Begrenzungskontur 98 und erhebt sich bis zu einer zweiten Begrenzungskontur 118, so dass der Wandansatz 108 den Vorratsraum 46 entlang eines zwischen der ersten Begrenzungskontur 98 und der zweiten Begrenzungskontur 118 liegenden zweiten Begrenzungsbereichs 122 umschließt.

Vorzugsweise ist das Basiselement 64 in einem Bereich wannenförmig ausgebildet, wobei der erste Begrenzungsbereich 96 den Wannenboden und der zweite Begrenzungsbereich 122 die Wannenwand bilden und der von der derart ausgeformten Wanne umfasste Wanneninnenraum 128 einen Teilraum des Vorratsraums 46 bildet.

In diesem Ausführungsbeispiel bildet ein Seitenwandelement 132 zwischen dem Basiselement 64 und dem Deckelelement 68 einen Seitenwandzwischenbereich 134 der Seitenwand 74.

Insbesondere schließt das Seitenwandelement 132 an der zweiten Begrenzungskontur 118 bündig an das Basiselement 64 und an einer dritten Begrenzungskontur 136 bündig an das Deckelelement 68 an.

Beispielsweise ist auch eine einstückige Ausbildung des Seitenwandelements 132 und des Deckelelements 68 möglich.

Das Deckelelement 68 schließt das Gehäuse 40 in dem zweiten Gehäuseendbereich 66 ab.

Beispielsweise besitzt das Deckelelement 68 im Wesentlichen die geometrische Form der Begrenzungsgrundfläche 102 des Basiselements 64.

Das Deckelelement 68 liegt entweder in einer flachen, insbesondere erhebungsfreien, geometrischen Fläche oder in einer gewölbten, insbesondere erhebungsfreien, geometrischen Fläche.

Es ist auch denkbar, dass ein Bereich des Deckelelements 68 einen Bereich der Seitenwand 74 bildet.

Vorteilhafterweise ist an dem Deckelelement 68 in einem Bereich der dritten Begrenzungskontur 136, insbesondere entlang der dritten Begrenzungskontur 136 die Gehäuseachse 54 geschlossen umlaufend ein Vorsprung 146 angeordnet, so dass der Vorsprung 146 einen Anschlag für das Seitenwandelement 132 bildet, welcher eine relative Positionsveränderung quer zur Gehäuseachse 54 zwischen dem Deckelelement 68 und dem Seitenwandelement 132 verhindert.

Ein beispielsweise als Zuganker oder als Schraube ausgebildetes Befestigungselement 152 verbindet das Basiselement 64, das Seitenwandelement 132 und das Deckelelement 68 derart, dass die Positionen dieser Elemente relativ zueinander fixiert sind.

Sind gegebenenfalls das Deckelelement 68 und das Seitenwandelement 132 einstückig ausgebildet und somit miteinander verbunden, so ist es auch möglich, dass das Befestigungselement 152 das Basiselement 64 nur mit dem Deckelelement 68 oder dem Seitenwandelement 132 verbindet, so dass auf diese Weise die Positionen dieser Elemente ebenfalls relativ zueinander fixiert sind.

Bei dieser Ausführungsform ist das Gehäuse 40 derart ausgebildet, dass geometrische Querschnittsbereiche, welche durch den geometrischen Schnitt des Gehäuses 40 mit in Erstreckungsrichtung 56 übereinanderliegenden geometrischen Querschnittsflächen, wobei die in Fig. 2 beispielhaft dargestellten Querschnittsflächen 154 und 154' senkrecht zur Darstellungsebene stehen, entstehen, eine im Wesentlichen gleiche geometrische, beispielsweise im Wesentlichen rechteckförmige, ellipsenförmige oder kreisförmige, Form besitzen, wobei unter im Wesentlichen gleichen Formen insbesondere Formen zu verstehen sind, die durch eine Streckung aufeinander abbildbar sind.

Wie bereits ausgeführt, ist das Trennelement 52 derart an dem Gehäuse 40 angeordnet, dass in dem Innenraum 44 des Gehäuses 40 das Trennelement 52 den Vorratsraum 46 von dem Ausdehnungsraum 48 abtrennt, insbesondere mediendicht abtrennt, so dass insbesondere kein Hydraulikmedium aus dem Vorratsraum 46 in den Ausdehnungsraum 48 entweichen kann und beispielsweise keine Luft aus dem Ausdehnungsraum 48 in den Vorratsraum 46 eindringen kann.

Beispielsweise wölbt sich das Trennelement 52 glockenartig über das Basiselement 64, insbesondere über den Wanneninnenraum 128, und der Vorratsraum 46 erstreckt sich von dem Basiselement 64 bis zu dem Trennelement 52, so dass das Basiselement 64 und das Trennelement 52 den Vorratsraum 46 geschlossen umschließen.

Vorzugsweise ist das Trennelement 52 zwischen dem Basiselement 64 und dem Seitenwandelement 132 gehalten und bildet mit dem Basiselement 64 einen mediendichten, insbesondere luftdichten und hydraulikmediumdichten Abschluss 176 für den Vorratsraum 46.

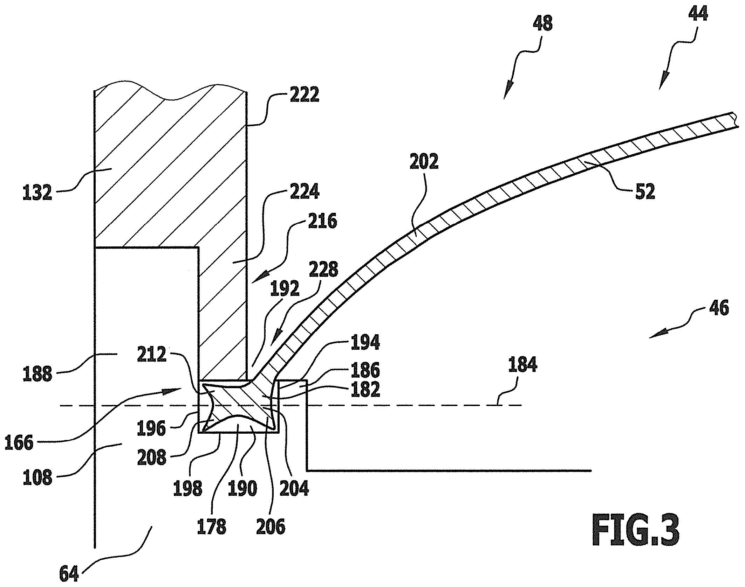

In diesem Ausführungsbeispiel, umfasst das Basiselement 64, insbesondere der Wandansatz 108, eine die Gehäuseachse 54 geschlossen umlaufende, beispielsweise entweder entlang der ersten Begrenzungskontur 98 oder entlang der zweiten Begrenzungskontur 118 angeordnete Aufnahme 178 für einen als Ganzes mit 182 bezeichneten Dichtkörper des Trennelements 52, deren Zusammenwirken den mediendichten Abschluss 176 ermöglicht (Fig. 2, ausschnittsweise vergrößert in Fig. 3).

Beispielsweise liegt die Aufnahme 178 in einer senkrecht zur Gehäuseachse 54 verlaufenden Aufnahmeebene 184.

Die, insbesondere zwischen einem inneren Seitenwandabschnitt 186 und einem äußeren Seitenwandabschnitt 188 angeordnete Aufnahme 178 ist beispielsweise in Form einer als Ganzes mit 190 bezeichneten Rinne ausgebildet, welche eine dem Basiselement 64 abgewandte und insbesondere dem Deckelelement 68 oder dem Seitenwandelement 132 zugewandte Rinnenöffnung 192 und von dieser ausgehend eine innere Rinnenwand 194 und eine äußere Rinnenwand 196 sowie einen Rinnenboden 198 aufweist.

In der Rinne 190 liegt der ringförmig ausgebildete Dichtkörper 182, der einen zumindest teilweise formvariablen, insbesondere einen insgesamt formvariablen Membrankörper 202 des Trennelements 52 umfangseitig umrandet und insbesondere einstückig an den Membrankörper 202 angeformt ist.

Die Rinne 190 nimmt den in seiner Form der Rinne 190 entsprechend ausgebildeten Dichtkörper 182 mit dieser dichtend abschließend auf.

Der Dichtkörper 182 des formvariablen Trennelements 52 umfasst mehrere, sich von einem Innenkörper 204 abspreizende Dichtlippen 206, 208, 212.

Insbesondere sind zwei der Dichtlippen 206, 208, 212 so ausgebildet, dass sie sich an dem Rinnenboden 198 und/oder an der inneren Rinnenwand 194 oder an der äußeren Rinnenwand 196 oder insbesondere in einer von der inneren Rinnenwand 194 oder der äußeren Rinnenwand 196 mit dem Rinnenboden 198 gebildeten Kante anliegen und eine weitere der Dichtlippen 206, 208, 212 legt sich im Abstand von dem Rinnenboden 198 an die äußere Rinnenwand 196 an, so dass sich vorzugsweise insgesamt drei Dichtlinien zwischen dem Dichtkörper 182 und dem Basiselement 64 ausbilden, die einen sicheren mediendichten Abschluss 176 bilden.

Ein Druckelement 216, beispielsweise ein an der dem Innenraum 44 zugewandten Seite 222 des Seitenwandelements 132 angeordneter Absatz 224, beaufschlagt insbesondere durch die Rinnenöffnung 192 greifend den Dichtkörper 182 und presst bei Verschluss des Gehäuses 40 mittels des Befestigungselements 152, beispielsweise einer Verschraubung des Gehäuses 40 mittels des als Schraube ausgebildeten Befestigungselements 152, den Dichtkörper 182 in die Rinne 190, so dass sich die mehreren Dichtlippen 206, 208, 212 spreizen und dicht abschließende Dichtlinien entlang des Rinnenbodens 198 oder der inneren Rinnenwand 194 oder der äußeren Rinnenwand 196 ausbilden.

Der durch eine Lücke 228 zwischen dem Druckelement 216 und der Rinne 190, beispielsweise dadurch entstehend, dass der Absatz 224 die Rinne 190 in radialer Richtung zur Erstreckungsrichtung 56 nur teilweise übergreift, greifend mit dem Dichtkörper 182 verbundene Membrankörper 202 erstreckt sich von dem Dichtkörper 182 über den Vorratsraum 46 und übergreift insbesondere den ersten Begrenzungsbereich 96 des Basiselements 64 und gegebenenfalls den zweiten Begrenzungsbereich 122 des Basiselements 64.

In einem füllstandanzeigenden Bereich 232 des Trennelements 52, insbesondere des Membrankörpers 202, ist das Trennelement 52 flexibel ausgebildet, so dass bei einer, beispielsweise durch einen Abfluss von Hydraulikmedium durch den Auslass 82 bedingten Volumenänderung des in dem Vorratsraum 46 bevorrateten Hydraulikmediums der füllstandanzeigende Bereich 232 eine füllstandanzeigende Stellung 234, welche den jeweiligen Füllstand an bevorratetem Hydraulikmedium in dem Vorratsraum 46 anzeigt, verändert.

Beispielsweise ergibt sich aus dem Grad der Wölbung in Richtung von dem Basiselement 64 weg oder in Richtung des Basiselements 64 des füllstandanzeigenden Bereichs 232 der Füllstand des in dem Vorratsraum 46 bevorrateten Hydraulikmediums, so dass der Grad der Wölbung des füllstandanzeigenden Bereichs 232 die füllstandanzeigende Stellung 234 darstellt.

Beispielsweise ist auch denkbar, dass die Position des füllstandanzeigenden Bereichs 232 relativ zu einer Skala, insbesondere der Abstand von dem füllstandanzeigenden Bereich 232 zu der Aufnahmeebene 184, die füllstandanzeigende Stellung 234 darstellt.

Insbesondere kann eine Minimalfüllstand-anzeigende Stellung des füllstandanzeigenden Bereichs 232 vorgesehen sein, in welche die füllstandanzeigende Stellung 234 übergeht, wenn der Füllstand an bevorratetem Hydraulikmedium in dem Vorratsraum 46 einen vordefinierten Minimalfüllstand erreicht.

Beispielsweise signalisiert der füllstandanzeigende Bereich 232, wenn er sich in der Aufnahmeebene 184 erstreckt und sich nicht mehr über diese wölbt oder er nicht mehr von der Aufnahmeebene 184 beabstandet ist, dass der Füllstand des bevorrateten Hydraulikmediums in dem Vorratsraum 46 den Minimalfüllstand erreicht hat.

Beispielsweise ist auch denkbar, dass der füllstandanzeigende Bereich 232 in eine Maximalfüllstand-anzeigende Stellung übergeht, wenn der Füllstand des bevorrateten Hydraulikmediums in dem Vorratsraum 46 einen vordefinierten Maximalfüllstand erreicht. Beispielsweise signalisiert der füllstandanzeigende Bereich 232, wenn dieser in Kontakt mit dem Seitenwandelement 132 oder dem Deckelelement 68 kommt, dass der Füllstand des bevorrateten Hydraulikmediums in dem Vorratsraum 46 den Maximalfüllstand erreicht hat.

Die füllstandanzeigende Stellung 234 des füllstandanzeigenden Bereichs 232 ist von außerhalb des Gehäuses 40 durch einen transparenten, insbesondere an dem Gehäuse 40 angeordneten Sichtbereich 242 sichtbar.

Es sind verschiedene Ausführungsformen des transparenten Sichtbereichs 242 möglich.

Beispielsweise umfasst ein Element des Gehäuses 40, insbesondere das Seitenwandelement 132 und/oder das Deckelelement 68 oder auch noch das Basiselement 64, einen den transparenten Sichtbereich 242 bildenden, transparent ausgebildeten Teilbereich.

Bei dieser Ausführungsform ist das jeweilige Element des Gehäuses 40, beispielsweise das Seitenwandelement 132 und/oder das Deckelelement 68 oder auch noch das Basiselement 64, insgesamt aus einem transparenten Material ausgebildet.

Bei dieser Ausführungsform des Ausgleichsbehälters 30 wird der Sichtbereich 242 durch das, insbesondere sich in die Erstreckungsrichtung 56 über dem Basiselement 64 erhebende und den Ausdehnungsraum 48 umschließende Seitenwandelement 132 gebildet.

Somit liegt der Sichtbereich 242 in dem Gehäusezwischenbereich 72.

Insbesondere erstreckt sich der transparente Sichtbereich 242 von der Aufnahme 178 in Richtung der Erstreckungsrichtung 56, insbesondere von der Aufnahmeebene 184 ausgehend von dem Basiselement 64 weg.

Der Sichtbereich 242 verläuft vorzugsweise entlang der zweiten Begrenzungskontur 118 und somit insgesamt um die Gehäuseachse 54 herum, so dass der füllstandanzeigende Bereich 232 des Trennelements 52 von allen Seiten erkennbar ist.

Beispielsweise ist auch denkbar, dass der Sichtbereich 242 in einem Element des Gehäuses 40, beispielsweise dem Seitenwandelement 132 oder auch dem Deckelelement 68, angeordnet ist und durch einen oder mehrere Durchbrüche in dem jeweiligen Element des Gehäuses 40 ausgebildet ist, wobei insbesondere mehrere, voneinander beabstandete und in Richtung der Erstreckungsrichtung 56 übereinanderliegende Durchbrüche eine Skala zum Ablesen, durch Erkennen der füllstandanzeigenden Stellung 234 durch einen der Durchbrüche, des Füllstands des in dem Vorratsraum 46 bevorrateten Hydraulikmediums bilden.

Beispielsweise zeigt ein Durchbruch den Minimalfüllstand an, dadurch, dass solange ausreichend Hydraulikmedium in dem Vorratsraum 46 bevorratet ist, zumindest ein Bereich des Trennelements 52 weiter von dem Basiselement 64, insbesondere von der Aufnahmeebene 184 beabstandet ist als der Durchbruch, so dass der füllstandanzeigende Bereich 232 durch den Durchbruch sichtbar ist, jedoch bei Absinken des Füllstands des in dem Vorratsraum 46 bevorrateten Hydraulikmediums unterhalb des Minimalfüllstands das Trennelement 52, insbesondere der füllstandanzeigende Bereich 232 einen geringeren Abstand zum Basiselement 64, insbesondere zu der Aufnahmeebene 184 hat als der Durchbruch und somit der füllstandanzeigende Bereich 232 nicht mehr durch den Durchbruch sichtbar ist und somit der Minimalfüllstand angezeigt wird.

Kurz zusammengefasst funktionieren ausgesuchte Elemente des Ausgleichsbehälters 30 wie folgt:
Fließt Hydraulikmedium aus dem Vorratsraum 46 über den Auslass 82 in die zweite Hydraulikleitung 34 ab, um in dem hydraulischen Betätigungssystem 10 Hydraulikmedium zu ersetzen, so verringert sich das Volumen des in dem Vorratsraum 46 bevorrateten Hydraulikmediums und folglich die Form und/oder die Relativposition bezogen auf eine Markierung des flexibel ausgebildeten füllstandanzeigenden Bereichs 232 des Trennelements 52, insbesondere der Grad der Wölbung des füllstandanzeigenden Bereichs 232, so dass die füllstandanzeigende Stellung 234 des füllstandanzeigenden Bereichs 232 verändert wird.

Da die füllstandanzeigende Stellung 234 des füllstandanzeigenden Bereichs 232 durch den Sichtbereich 242 von außerhalb des Gehäuses 40 sichtbar ist, ermöglicht die erfindungsgemäße Ausgestaltung des Ausgleichsbehälters 30 somit einerseits ein Ablesen des Füllstands des in dem Vorratsraum 46 bevorrateten Hydraulikmediums durch einen Benutzer des hydraulischen Betätigungssystems 10 von außerhalb des Gehäuses 40, wobei andererseits der Vorratsraum 46 in einfacher Weise mediendicht abgeschlossen ist und das Trennelement 52 durch das Gehäuse 40 gegen äußere Einwirkungen geschützt ist.

Verringert sich der Füllstand des in dem Vorratsraum 46 bevorrateten Hydraulikmediums bis zu dem Minimalfüllstand, so geht die füllstandanzeigende Stellung 234 des füllstandanzeigenden Bereichs 232 in die Minimalfüllstand-anzeigende Stellung, beispielsweise gebildet durch einen bestimmten Grad der Wölbung des füllstandanzeigenden Bereichs 232, insbesondere durch dessen Erstrecken in die Aufnahmeebene 184, oder gebildet durch Erreichen des füllstandanzeigenden Bereichs 232 einer Markierung in dem Sichtbereich 242, beispielsweise der Übergang von dem intransparenten Basiselement 64 zu der transparenten Seitenwand 74, über und der Benutzer des hydraulischen Betätigungssystems 10 ist durch diese Minimalfüllstand-anzeigende Stellung in die Lage versetzt zu erkennen, dass ein Nachfüllen von Hydraulikmedium in den Vorratsraum 46 erforderlich ist.

Bei einem zweiten Ausführungsbeispiel einer erfindungsgemäßen Lösung sind diejenigen Teile, welche mit denen des ersten Ausführungsbeispiels identisch sind, mit denselben Bezugszeichen versehen, so dass bezüglich der Beschreibung derselben vollinhaltlich auf die Ausführungen zu dem ersten Ausführungsbeispiel verwiesen werden kann.

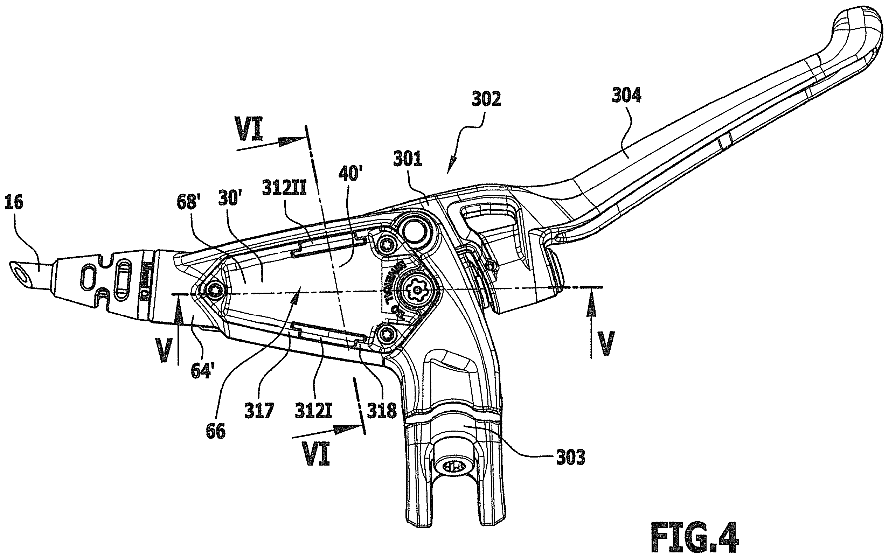

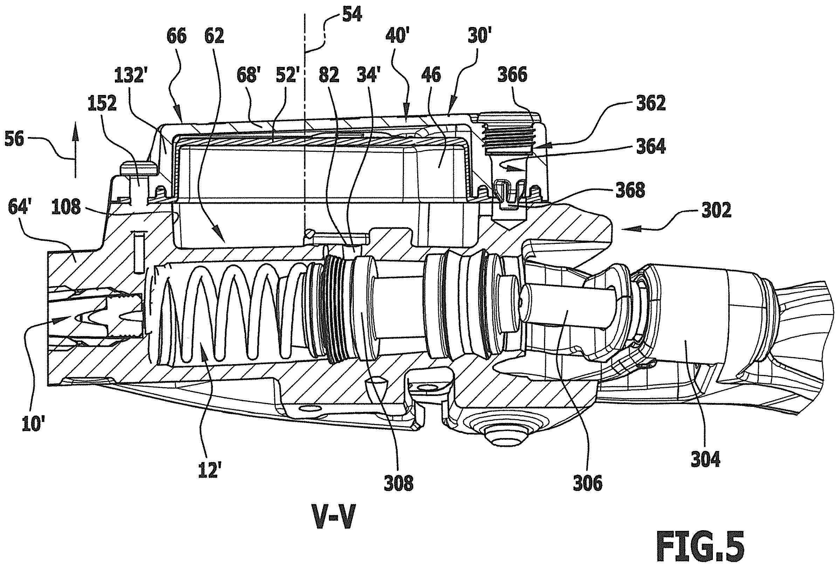

Bei dem zweiten Ausführungsbeispiel ist ein Teil eines hydraulischen Betätigungssystems 10' in ein Armaturengehäuse 301 einer Bremsarmatur 302 integriert (Fig. 4 und 5).

Die Bremsarmatur 302 ist für ein Fahrzeug, insbesondere für ein lenkergeführtes Fahrzeug, vorgesehen.

Zur Anordnung an das Fahrzeug umfasst die Bremsarmatur 302 eine Befestigungsvorrichtung 303, beispielsweise einen Teil einer Schraubverbindung.

In dem Armaturengehäuse 301 ist ein Hauptzylinder 12' und ein Ausgleichsbehälter 30'des hydraulischen Betätigungssystems 10' angeordnet, insbesondere bildet das Armaturengehäuse 301 zumindest bereichsweise ein Gehäuse des Hauptzylinders 12' und ein Gehäuse 40' des Ausgleichsbehälters 30' aus.

Eine erste Hydraulikleitung 16, welche den Hauptzylinder 12' mit einem Betätigungszylinder 14 des hydraulischen Betätigungssystems 10' fluidführend verbindet, ist an die Bremsarmatur 302 anschließbar.

Die Bremsarmatur 302 weist ferner eine Beaufschlagungseinrichtung 304 auf, welche bei diesem Ausführungsbeispiel einen Bremshebel umfasst, welcher an das Armaturengehäuse 301 angeordnet ist.

Die Beaufschlagungseinrichtung 304 ist kraftübertragend mit dem Hauptzylinder 12' verbunden und bei einem Betätigen der Beaufschlagungseinrichtung 304 wirkt ein Beaufschlagungselement 306 der Beaufschlagungseinrichtung 304 auf einen Kolben 308 des Hauptzylinders 12' ein.

Bei der Einwirkung des Beaufschlagungselements 306 auf den Kolben 308 wird der Kolben 308 in Bewegung gesetzt und beaufschlagt in dem hydraulischen Betätigungssystem 10' vorhandenes Hydraulikmedium.

Eine zweite Hydraulikleitung 34', welche den Hauptzylinder 12' und den Ausgleichsbehälter 30' fluidführend verbindet, ist in der Art eines Kanals in der Bremsarmatur 302 angeordnet, insbesondere in das Armaturengehäuse 301 integriert.

Das Armaturengehäuse 301 bildet ein Basiselement 64' des Ausgleichsbehälters 30' aus.

Ein Wandansatz 108 des Basiselements 64' umschließt teilweise den Innenraum 44, insbesondere den Vorratsraum 46 des Ausgleichsbehälters 30'.

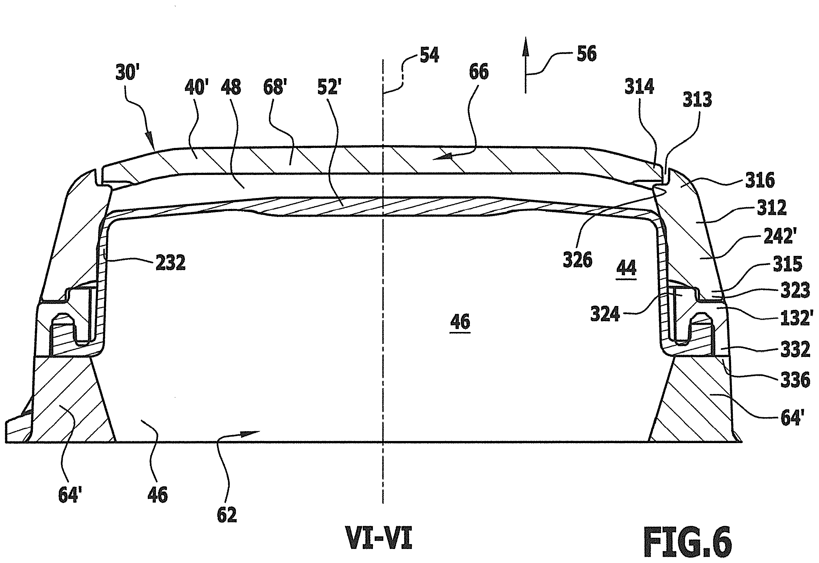

Ein Deckelelement 68' des Ausgleichsbehälters 30' erstreckt sich zum einen in dem zweiten Gehäuseendbereich 66 und ausgehend von diesem erstreckt sich das Deckelelement 68' zum anderen in Richtung des Basiselementes 64' und umschließt dabei den Ausdehnungsraum 48 teilweise (Fig. 5 und 6).

Damit bildet das Deckelelement 68' ebenso ein Seitenwandelement 132' aus.

Das Deckelelement 68' und das Seitenwandelement 132' begrenzen den Ausdehnungsraum 48 in zu der Hauptachse 54 axialer Richtung in dem zweiten Gehäuseendbereich 66 und umranden in zu der Gehäuseachse 54 radialer Richtung den Ausdehnungsraum 48.

Das Seitenwandelement 132' umfasst einen transparenten Einsatz 312, welcher einen transparenten Sichtbereich 242' ausbildet.

Bei diesem Ausführungsbeispiel ist ein erster transparenter Einsatz 312I und ein zweiter transparenter Einsatz 312II vorgesehen, wobei beispielsweise die transparenten Einsätze 312I und 312II an sich gegenüberliegenden Seiten des Seitenwandelementes 132' angeordnet sind.

Die transparenten Einsätze 312I und 312II sind gleich ausgebildet, so dass diese im Folgenden gemeinsam beschrieben werden und bei der Beschreibung derselben auf die explizite Nennung der Spezifizierung I und II verzichtet wird.

Der transparente Einsatz 312 ist für sichtbares Licht durchlässig ausgebildet, so dass durch den transparenten Einsatz 312 der Ausdehnungsraum 48 einsehbar ist.

Außerdem ist durch den transparenten Einsatz 312 ein Trennelement 52' sowie dessen füllstandanzeigender Bereich 232 sichtbar.

Der transparente Einsatz 312 ist aus einem UV-Licht absorbierenden Material ausgebildet und somit für UV-Licht im Wesentlichen undurchlässig.

Damit umfasst der Sichtbereich 242' einen UV-Filter.

Beispielsweise ist der transparente Einsatz 312 als ein separates Teil des Seitenwandelementes 132' ausgebildet.

Dabei ist der transparente Einsatz 312 in eine Aussparung 313 des Seitenwandelementes 132' einsetzbar.

Die Aussparung 313 ist von einer Umrandung 314 des Seitenwandelementes 132' umrandet.

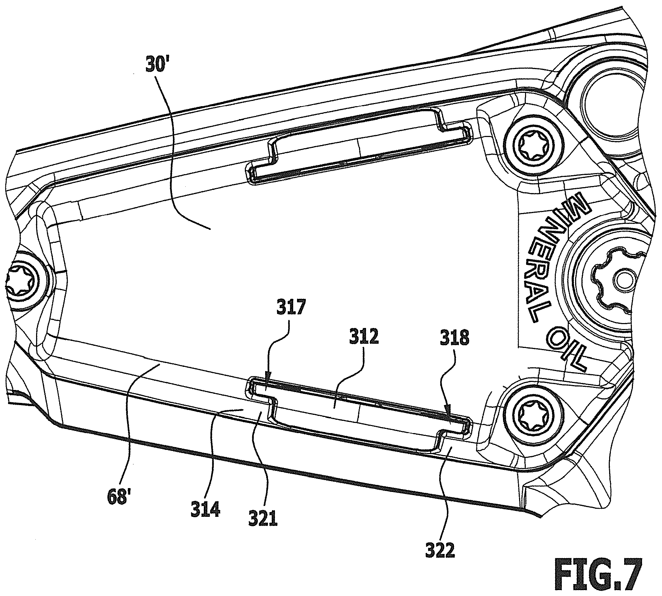

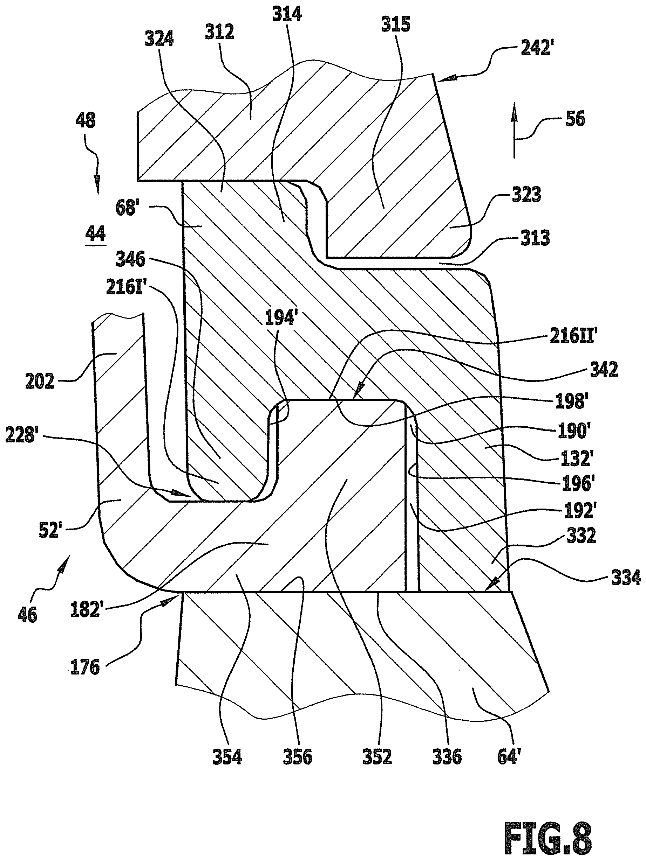

Der transparente Einsatz 312 ist an der Umrandung 314 anliegend angeordnet (Fig. 6, 7 und 8).

In Richtung der Erstreckungsrichtung 56 des Ausgleichsbehälters 30' erstreckt sich der transparente Einsatz 312 von einem ersten Endabschnitt 315 bis zu einem zweiten Endabschnitt 316 und quer hierzu von einem ersten Seitenbereich 317 bis zu einem zweiten Seitenbereich 318.

In den Seitenbereichen 317 und 318 umgreift die Umrandung 314 den transparenten Einsatz 312 mit Halteelementen 321 und 322, wobei die Halteelemente 321 und 322 den transparenten Einsatz 312 in der Aussparung 313 halten.

In den Seitenbereichen 317 und 318 ist der transparente Einsatz 312, zumindest abschnittsweise zwischen dem Innenraum 44 des Ausgleichsbehälters 30' und der Umrandung 314, angeordnet und die Umrandung 314 bildet so abschnittsweise einen Anschlag für den transparenten Einsatz 312 damit der transparente Einsatz 312 nicht sich von dem Innenraum 44 entfernend verrutscht.

Mit dem ersten Endabschnitt 315 liegt der transparente Einsatz 312 auf dem Seitenwandelement 132' auf.

Mit einer Nase 323 übergreift der transparente Einsatz 312 einen Sockelabschnitt 324 der Umrandung 314, wobei der Sockelabschnitt 324 zwischen dem Innenraum 44 und der Nase 323 angeordnet ist.

Beispielsweise ist die Umrandung 314 im Bereich des ersten Endabschnitts 315 als sich in Richtung der Erstreckungsrichtung 56 erhöhende Stufe ausgebildet, deren erhöhter Teil dem Innenraum 44 zugewandt ist und der erhöhte Teil der Stufe wird auf einer dem Innenraum 44 abgewandten Seite von der Nase 323 übergriffen.

Mit dem zweiten Endabschnitt 316 liegt der transparente Einsatz 312 an dem Deckelelement 68' an.

Mit einem Einrastabschnitt 326 untergreift der transparente Einsatz 312 die Umrandung 314, so dass in Richtung der Erstreckungsrichtung 56 der transparente Einsatz 312 zwischen einem an dem Deckelelement 68' angeordneten Bereich der Umrandung 314 einerseits und einem an dem Seitenwandelement 132' angeordneten Bereich der Umrandung 314 andererseits angeordnet ist, insbesondere eingeklemmt ist.

Das Seitenwandelement 132' liegt mit einem Endabschnitt 332 in einem Kontaktbereich 334 an einem Auflageabschnitt 336 des Basiselementes 64' an.

Das Seitenwandelement 132' umfasst eine als Ganzes mit 342 bezeichnete Aufnahme für einen Dichtkörper 182' des Trennelementes 52'.

Die Aufnahme 342 ist als eine Rinne 190' ausgebildet mit einer dem Basiselement 64' zugewandten Rinnenöffnung 192'.

Ausgehend von der Rinnenöffnung 192' erstrecken sich eine äußere Rinnenwand 196' und eine innere Rinnenwand 194' in Richtung von dem Basiselement 64' entfernend bis zu einem Rinnenboden 198', welcher die Rinnenwände 194' und 196' verbindet und die Rinne 190' abschließt.

Damit ist bei diesem Ausführungsbeispiel der Rinnenboden 198' bezogen auf die Erstreckungsrichtung 56 oberhalb der Rinnenöffnung 192' angeordnet.

Die innere Rinnenwand 194' ist an einer dem Innenraum 44 des Ausgleichsbehälters 30' zugewandten Seite der Rinne 190' angeordnet und die äußere Rinnenwand 196' ist an einer Seite, welche der dem Innenraum 44 zugewandten Seite gegenüberliegt, angeordnet.

Die äußere Rinnenwand 196' erstreckt sich ausgehend von der Rinne 190' durch die Rinnenöffnung 192' hindurch weiter bis zu dem Endabschnitt 332 des Seitenwandelementes 132'.

Die innere Rinnenwand 194' bildet eine dem Innenraum 44 abgewandte Seite eines Vorsprungs 346 des Seitenwandelementes 132'.

Der Vorsprung 346 erstreckt sich weniger weit in Richtung des Basiselementes 64' als das Seitenwandelement 132' sich mit seinem Endabschnitt 332 in Richtung des Basiselementes 64' erstreckt, so dass zwischen dem Vorsprung 346 und dem Basiselement 64', insbesondere zwischen dem Vorsprung 346 und dem Auflageabschnitt 336 des Basiselementes 64', eine Lücke 228' angeordnet ist.

Die Lücke 228' ist in der Art eines Spaltraums zwischen dem Vorsprung 346 und dem Basiselement 64' ausgebildet.

Das Trennelement 52' greift durch die Lücke 228' hindurch und der Dichtkörper 182' des Trennelementes 52' ist zumindest teilweise in der Aufnahme 342 angeordnet.

Außerdem liegt der Dichtkörper 182' auf dem Auflageabschnitt 336 des Basiselementes 64'.

Der Dichtkörper 182' liegt mit einem Wulstbereich 352 in der Rinne 190'.

Dabei erstreckt sich der Wulstbereich 352 des Dichtkörpers 182' durch die Rinnenöffnung 192' von dem Seitenwandelement 132' bis zu dem Basiselement 64', insbesondere von dem Rinnenboden 198' bis zu dem Auflageabschnitt 336 des Basiselementes 64'.

Der Wulstbereich 352 ist mit einem Verbindungsabschnitt 354 des Dichtkörpers 182' mit dem Membrankörper 202 des Trennelements 52' verbunden.

Dabei erstreckt sich der Verbindungsabschnitt 354 durch die Lücke 228' hindurch.

Der Wulstbereich 352 des Dichtkörpers 182' ist dicker ausgebildet als der Verbindungsabschnitt 354.

Dabei bemisst sich die Dicke des Dichtkörpers 182', also auch des Wulstbereichs 352 und des Verbindungsabschnitts 354, quer zu einer Erstreckungsrichtung des Dichtkörpers 182' von dem Wulstbereich 352 in Richtung des Verbindungsabschnitts 354 bis zu dem Membrankörper 202.

Also bezieht sich die Dicke des Dichtkörpers 182' und auch des Wulstbereichs 352 und des Verbindungsabschnitts 354 auf einen Querschnitt des Dichtkörpers 182', wobei der Querschnitt von dem Innenraum 44 des Ausgleichsbehälters 30' nach außerhalb des Ausgleichsbehälters 30' verläuft.

Außerdem erstreckt sich der Wulstbereich 352 von einer dem Basiselement 64' zugewandten Seite weiter bis zu einer dem Seitenwandelement 132' zugewandten Seite als sich der Verbindungsabschnitt 354 von einer dem Basiselement 64' zugewandten Seite bis zu einer dem Seitenwandelement 132' zugewandten Seite erstreckt.

Dabei liegen sowohl der Wulstbereich 352 als auch der Verbindungsabschnitt 354 mit ihrer dem Basiselement 64' zugewandten Seite auf dem Auflageabschnitt 336 des Basiselementes 64'.

Dabei ist bei diesem Ausführungsbeispiel vorgesehen, dass eine Auflagefläche 356 des Auflageabschnitts 336 für den Dichtkörper 182' im Wesentlichen planar ist.

Bei einer Variante ist jedoch vorgesehen, dass der Auflageabschnitt 336 beispielsweise eine Stufe oder eine Aufnahme für den Dichtkörper 182' umfasst.

Das Seitenwandelement 132' übergreift insbesondere den Wulstbereich 352 des Dichtkörpers 182', wobei der Vorsprung 346 des Seitenwandelementes 132' zwischen dem Wulstbereich 352 und dem Innenraum 44 angeordnet ist.

Das Seitenwandelement 132' beaufschlagt den Dichtkörper 182' und somit ist der Dichtkörper 182' zwischen dem Seitenwandelement 132' und dem Basiselement 64' verpresst und somit bildet sich der mediendichte Abschluss 176 aus.

Dabei liegt der Dichtkörper 182' großflächig auf dem Auflageabschnitt 336 des Basiselementes 64' auf, so dass eine besonders günstige Abdichtung erfolgt.

Das Seitenwandelement 132' beaufschlagt mit dem Vorsprung 346 den Dichtkörper 182', insbesondere den Verbindungsabschnitt 354, so dass der Vorsprung 346 auch als ein Druckelement 216I' ausgebildet ist.

Außerdem beaufschlagt das Seitenwandelement 132' den Dichtkörper 182', insbesondere den Wulstbereich 352, auch in der Aufnahme 342.

Dabei presst insbesondere der Rinnenboden 198' auf den Wulstbereich 352 des Dichtkörpers 182', wobei der Wulstbereich 352 viel Dichtmasse bereitstellt zum Zusammenpressen, so dass eine besonders günstige Abdichtung erreicht wird.

Damit ist ein Teil des Seitenwandelementes 132' im Bereich des Rinnenbodens 198' als ein weiteres Druckelement 216II' ausgebildet.

Somit ist bei dem zweiten Ausführungsbeispiel eine redundante Abdichtung durch das Seitenwandelement 132' bereitgestellt.

Der Ausgleichsbehälter 30' umfasst eine Einlassvorrichtung 362, mittels welcher neues Hydraulikmedium in den Vorratsraum 46 eingelassen werden kann und so der Vorratsraum 46 mit Hydraulikmedium wieder auffüllbar ist.

Das Gehäuse 40', insbesondere das Deckelelement 68', umfasst eine Einlassöffnung 364, welche mit einem Verschluss 366 mediendicht verschließbar ist und bei Bedarf lässt sich der Verschluss 366 wieder von der Einlassöffnung 364 trennen und so lässt sich die Einlassöffnung 364 wieder öffnen.

Die Einlassöffnung 364 mündet in einen Einlasskanal 368 des Gehäuses 40', welcher die Einlassöffnung 364 mit dem Vorratsraum 46 verbindet.

Bei diesem Ausführungsbeispiel ist der Einlasskanal 368 in dem Basiselement 64' angeordnet.

In einem Einlassbereich 372 mündet die Einlassöffnung 364 in den Einlasskanal 368, welcher sich von dem Einlassbereich 372 bis zu einem Mündungsbereich 374 erstreckt und in dem Mündungsbereich 374 in den Vorratsraum 46 mündet.

Bei diesem Ausführungsbeispiel ist der Einlasskanal 368 als eine von dem Einlassbereich 372 bis zu dem Mündungsbereich 374 durchgängige Vertiefung in dem Basiselement 64' ausgebildet.

Zwischen der beispielsweise an dem Deckelelement 68' angeordneten Einlassöffnung 364 und dem beispielsweise in dem Basiselement 64' angeordneten Einlasskanal 368 ist in dem Einlassbereich 372 zur Abdichtung eine Dichtung 376 vorgesehen.

Bei diesem Ausführungsbeispiel ist die Dichtung 376 mit dem Trennelement 52' einstückig ausgebildet.

Insbesondere erstreckt sich ein Abdichtungsabschnitt 378 des Trennelements 52' von dem Mündungsbereich 374 bis zu dem Einlassbereich 372 über den beispielsweise als Vertiefung ausgebildeten Einlasskanal 368 und dichtet diesen zwischen dem Mündungsbereich 374 und dem Einlassbereich 372 ab.

Im Übrigen sind alle weiteren Teile bei dem zweiten Ausführungsbeispiel mit jenen des ersten Ausführungsbeispiels identisch, so dass auf die Ausführungen zu dem ersten Ausführungsbeispiel verwiesen werden kann.

## Patentansprüche

1. Ausgleichsbehälter (30) für ein hydraulisches Betätigungssystem (10), insbesondere ein hydraulisches Bremssystem oder ein Kupplungssystem, umfassend ein Gehäuse (40), in dessen Innenraum (44) ein zur Bevorratung von Hydraulikmedium vorgesehener Vorratsraum (46) durch ein entsprechend einem Volumen des Vorratsraums (46) seine Form veränderndes Trennelement (52) begrenzt ist,
wobei das Gehäuse (40) das Trennelement (52) in allen seinen Formen, welche möglichen Volumina des Vorratsraums (46) entsprechen, schützend übergreift, wobei ein füllstandanzeigender Bereich (232) des Trennelements (52) bei einer Änderung des von dem in dem Vorratsraum (46) bevorrateten Hydraulikmedium beanspruchten Volumens seine Lage in dem Gehäuse (40) verändert und diese Lage jeweils eine füllstandanzeigende Stellung (234) darstellt und wobei die innerhalb des Gehäuses (40) liegende füllstandanzeigende Stellung (234) durch einen Sichtbereich (242) des Gehäuses (40) von außerhalb des Gehäuses (40) sichtbar ist, **dadurch gekennzeichnet, dass** das Trennelement (52) einen Membrankörper (202) umfasst, welcher als formvariable Membran oder als Balg ausgebildet ist, dass das Trennelement einen Dichtkörper (182) umfasst, welcher den Vorratsraum (46) am Übergang zwischen dem Trennelement (52) und dem Gehäuse (40) abdichtet, und dass ein Wulstbereich (352) des Dichtkörpers (182) mit einem Verbindungsabschnitt (354) an dem Membrankörper (202) angeordnet ist.

2. Ausgleichsbehälter (30) nach Anspruch 1, **dadurch gekennzeichnet, dass** die füllstandanzeigende Stellung (234) des füllstandanzeigenden Bereichs (232) des Trennelements (52) durch die Form des füllstandanzeigenden Bereichs (232) dargestellt ist.

3. Ausgleichsbehälter (30) nach einem der voranstehenden Ansprüche, **dadurch gekennzeichnet, dass** das Trennelement (52) mit einem Basiselement (64) des Gehäuses (40) verbunden ist.

4. Ausgleichsbehälter (30) nach Anspruch 3, **dadurch gekennzeichnet, dass** der Vorratsraum (46) von dem Trennelement (52) und dem Basiselement (64) umschlossen ist.

5. Ausgleichsbehälter (30) nach einem der voranstehenden Ansprüche, **dadurch gekennzeichnet, dass** der Sichtbereich (242) des Gehäuses (40) so angeordnet ist, dass ein in dem Gehäuse (40) vorgesehener Ausdehnungsraum (48) für das Trennelement (52) einsehbar ist.

6. Ausgleichsbehälter (30) nach einem der voranstehenden Ansprüche, **dadurch gekennzeichnet, dass** der Sichtbereich (242) einen UV-Filter umfasst.

7. Ausgleichsbehälter (30) nach einem der voranstehenden Ansprüche, **dadurch gekennzeichnet, dass** der Ausdehnungsraum (48) von einem Seitenwandelement (132) des Gehäuses (40) umgeben ist.

8. Ausgleichsbehälter (30) nach Anspruch 7, **dadurch gekennzeichnet, dass** das Seitenwandelement (132) teilweise transparent ist, beispielsweise einen transparenten Einsatz (312) umfasst.

9. Ausgleichsbehälter nach Anspruch 7 oder 8, **dadurch gekennzeichnet, dass** das Seitenwandelement (132) vollständig transparent ist.

10. Ausgleichsbehälter (30) nach einem der voranstehenden Ansprüche, wobei insbesondere der Dichtkörper (182) und der Membrankörper (202) einstückig ausgebildet sind.

11. Ausgleichsbehälter (30) nach einem der voranstehenden Ansprüche, **dadurch gekennzeichnet, dass** das Gehäuse (40), insbesondere das Seitenwandelement (132) und/oder das Basiselement (64), eine Aufnahme (178, 342) für den Dichtkörper (182) des Trennelements (52) aufweist.

12. Ausgleichsbehälter (30) nach einem der voranstehenden Ansprüche, **dadurch gekennzeichnet, dass** der Dichtkörper (182), insbesondere in der Aufnahme (178, 342) durch ein Druckelement (216) beaufschlagt und bezogen auf den unbeaufschlagten Zustand deformiert ist.

13. Bremsarmatur (302), **dadurch gekennzeichnet, dass** in die Bremsarmatur (302) ein Ausgleichsbehälter (30) nach einem der voranstehenden Ansprüche integriert ist, insbesondere dass ein Armaturengehäuse (301) der Bremsarmatur (302) einen Teil des Gehäuses (40), beispielsweise ein Basiselement (64), des Ausgleichsbehälters (30) ausbildet.

## Claims

1. A compensation reservoir (30) for a hydraulic actuating system (10), in particular a hydraulic brake system or a coupling system, comprising a housing (40), in the interior space (44) of which a storage space (46) provided for the storage of hydraulic medium is limited by a separating element (52) which alters its shape in correspondence with a volume of the storage space (46), wherein the housing (40) overlaps in protective manner the separating element (52) in all its shapes, which correspond to possible volumes of the storage space (46), wherein a level-indicating-region (232) of the separating element (52) changes its position in the housing (40) when there is a change in the volume occupied by the hydraulic medium stored in the storage space (46) and this position respectively represents a level-indicating position (234) and wherein the level indicating position (234) located within the housing (40) is visible from outside the housing (40) through a viewing region (242) of the housing (40),
**characterised in that** the separating element (52) comprises a membrane body (202), which is formed as a shape-variable membrane or as a bellows, **in that** the separating element comprises a sealing body (182), which seals the storage space (46) at the transition between the separating element (52) and the housing (40), and **in that** a bead region (352) of the sealing body (182) is arranged with a connection portion (354) on the membrane body (202).

2. A compensation reservoir (30) according to claim 1, **characterised in that** the level-indicating position (234) of the level-indicating region (232) of the separating element (52) is represented by the shape of the level-indicating region (232).

3. A compensation reservoir (30) according to any of the preceding claims, **characterised in that** the separating element (52) is connected with a base element (64) of the housing (40).

4. A compensation reservoir (30) according to claim 3, **characterised in that** the storage space (46) is enclosed by the separating element (52) and the base element (64).

5. A compensation reservoir (30) according to any of the preceding claims, **characterised in that** the viewing region (242) of the housing (40) is so arranged that there is visible an expansion space (48) provided in the housing (40) for the separating element (52).

6. A compensation reservoir (30) according to any of the preceding claims, **characterised in that** the viewing region (242) comprises a UV-filter.

7. A compensation reservoir (30) according to any of the preceding claims, **characterised in that** the expansion space (48) is surrounded by a side wall element (132) of the housing (40).

8. A compensation reservoir (30) according to claim 7, **characterised in that** the side wall element (132) is partially transparent, for example comprises a transparent insert (312).

9. A compensation reservoir (30) according to claim 7 or 8, **characterised in that** the side wall element (132) is completely transparent.

10. A compensation reservoir (30) according to any of the preceding claims, wherein in particular the sealing body (182) and the membrane body (202) are formed in one piece.

11. A compensation reservoir (30) according to any of the preceding claims, **characterised in in that** the housing (40), in particular the side wall element (132) and/or the base element (64), have a receptacle (178, 342) for the sealing body (182) of the separating element (52).

12. A compensation reservoir (30) according to any of the preceding claims, **characterised in that** the sealing body (182), in particular in the receptacle (178, 342) is loaded by a pressure element (216) and is deformed relative to the unloaded state.

13. A brake fitting (302), **characterised in that** a compensation reservoir (30) according to any of the preceding claims is integrated in the brake fitting (302), in particular **in that** a fitting housing (301) of the brake fitting (302) forms a part of the housing (40), for example a base element (64), of the compensation reservoir (30).

## Revendications

1. Réservoir de compensation (30) pour un système de commande (10) hydraulique, en particulier un système de freinage hydraulique ou un système de couplage, comprenant un logement (40), dans l'espace intérieur (44) duquel une chambre d'approvisionnement (46) prévue pour l'approvisionnement d'un milieu hydraulique est délimitée par un élément de séparation (52) modifiant sa forme en fonction d'un volume de la chambre d'approvisionnement (46),
dans lequel le logement (40) recouvre de façon protectrice l'élément de séparation (52) sous toutes ses formes, lesquelles correspondent à des volumes possibles de la chambre d'approvisionnement (46), dans lequel une zone de l'élément de séparation (52) indiquant un niveau de remplissage (232) modifie sa situation dans le logement (40) lors d'une modification du volume sollicité par le milieu hydraulique approvisionné dans la chambre d'approvisionnement (46) et cette situation représente respectivement une position indiquant un niveau de remplissage (234), et dans lequel la position indiquant un niveau de remplissage (234) se situant à l'intérieur du logement (40) est visible depuis l'extérieur du logement (40)à travers une zone de visibilité (242) du logement (40),
**caractérisé en ce que** l'élément de séparation (52) comprend un corps à membrane (202), lequel est conçu en tant que membrane à forme variable ou en tant que soufflet, **en ce que** l'élément de séparation comprend un corps d'étanchéité (182), lequel étanchéifie la chambre d'approvisionnement (46) au niveau de la transition entre l'élément de séparation (52) et le logement (40), et **en ce qu'**une zone de bourrelet (352) du corps d'étanchéité (182) est agencée avec une section de liaison (354) contre le corps à membrane (202).

2. Réservoir de compensation (30) selon la revendication 1, **caractérisé en ce que** la position indiquant un niveau de remplissage (234) de la zone indiquant un niveau de remplissage (232) de l'élément de séparation (52) est représentée par la forme de la zone indiquant un niveau de remplissage (232).

3. Réservoir de compensation (30) selon l'une des revendications précédentes, **caractérisé en ce que** l'élément de séparation (52) est relié à un élément de base (64) du logement (40).

4. Réservoir de compensation (30) selon la revendication 3, **caractérisé en ce que** la chambre d'approvisionnement (46) est enfermée par l'élément de séparation (52) et l'élément de base (64).

5. Réservoir de compensation (30) selon l'une des revendications précédentes, **caractérisé en ce que** la zone de visibilité (242) du logement (40) est agencée de telle sorte qu'une chambre de dilatation (48) prévue dans le logement (40) pour l'élément de séparation (52) soit visible.

6. Réservoir de compensation (30) selon l'une des revendications précédentes, **caractérisé en ce que** la zone de visibilité (242) comprend un filtre UV.

7. Réservoir de compensation (30) selon l'une des revendications précédentes, **caractérisé en ce que** la chambre de dilatation (48) est entourée par un élément de paroi latérale (132) du logement (40).

8. Réservoir de compensation (30) selon la revendication 7, **caractérisé en ce que** l'élément de paroi latérale (132) est partiellement transparent, par exemple comprenant un insert (312) transparent.

9. Réservoir de compensation selon la revendication 7 ou 8, **caractérisé en ce que** l'élément de paroi latérale (132) est entièrement transparent.

10. Réservoir de compensation (30) selon l'une des revendications précédentes, dans lequel en particulier le corps d'étanchéité (182) et le corps à membrane (202) sont conçus en une seule pièce.

11. Réservoir de compensation (30) selon l'une des revendications précédentes, **caractérisé en ce que** le logement (40), en particulier l'élément de paroi latérale (132) et/ou l'élément de base (64), présente une réception (178, 342) pour le corps d'étanchéité (182) de l'élément de séparation (52).

12. Réservoir de compensation (30) selon l'une des revendications précédentes, **caractérisé en ce que** le corps d'étanchéité (182), en particulier dans la réception (178, 342), est sollicité par un élément de pression (216) et déformé relativement à l'état non sollicité.

13. Armature de freinage (302), **caractérisée en ce qu'**un réservoir de compensation (30) selon l'une des revendications précédentes est intégré à l'armature de freinage (302), en particulier **en ce qu'**un logement d'armature (301) de l'armature de freinage (302) forme une partie du logement (40), par exemple un élément de base (64), du réservoir de compensation (30).
